# EUROPEAN PATENT SPECIFICATION

(11) **EP 1 266 772 B1**
(45) Date of publication and mention of the grant of the patent: **22.10.2008**
(21) Application number: 02012547.2
(22) Date of filing: 05.06.2002
(51) Int. Cl.: B60C 23/04

(54) **Tire pressure monitoring apparatus and method**
Reifendrucküberwachungssystem und Verfahren
Méthode et système de surveillance de la pression des pneus

(30) Priority: 14.06.2001 US 881155
(43) Date of publication of application: 18.12.2002
(73) Proprietor: TRW Automotive U.S. LLC, Livonia, Michigan 48150 (US)
(72) Inventor: Lin, Xing Ping, Orchard Lake, Michigan 48324 (US)
(74) Representative: Wagner, Karl H.

(56) References cited:
- EP-A- 1 077 144
- WO-A-01/12453
- US-A- 3 805 229

## Description

### Background of the Invention

The present invention relates to an apparatus and an associated method for monitoring pressure in a tire of a vehicle wheel.

A tire pressure monitoring apparatus has previously been utilized to provide an operator of a vehicle with an indication of tire pressure variation. This known tire pressure monitoring apparatus includes a wheel-mounted sensor that detects changes in air pressure in a tire and a wheel mounted transmitter that sends a signal that is a function of the sensed tire pressure. The signal is received by a receiver mounted on a body of the vehicle adjacent to the wheel. The receiver provides an output, which is a function of tire pressure, to a display on a dashboard of the vehicle.

The transmitter sends a radio frequency signal having a constant amplitude. When the vehicle is stationary, the radio frequency signal received by the receiver has a constant amplitude. However, when the vehicle is moving, the wheel and the transmitter rotate together relative to the receiving antenna. As the distance between the wheel and the receiving antenna varies due to rotation of the wheel, the amplitude of the signal received by the receiver varies.

The rate of amplitude level variation of the signal received by the receiver varies as a function of the speed of the vehicle. The greater the speed of the vehicle, the faster the wheel and transmitter are rotating. Therefore, the rate of level variation increases as the vehicle speed increases. Rapid variation in the level of the signal complicates the decoding of tire pressure indicating data conveyed by the signal.

Attention is drawn to US 3,806,869 which describes an improved RF receiver for pneumatic tire low pressure monitoring and warning system which senses a low pressure condition in a pneumatic tire and employs a transmitter which is fixed to a rotatable support for rotation therewith. The transmitter is located off center from the central axis of rotation of the rotatable support and is actuated by sensing means to provide pulse modulated output signals at a radio frequency in response to a low pressure condition in the tire. A receiver is provided for receiving the signals and such receiver operates to improve the character of the output signals while removing undesirable signals and such receiver activates an indicating device in response to a low pressure condition in the pneumatic tire.

In accordance with the present invention an apparatus for monitoring a condition of a tyre of a vehicle, as set forth in claim 1, and a method for monitoring a condition of a tyre of a vehicle, as set forth in claim 7, are provided. Embodiments of the invention are described in the dependent claims.

### Brief Description of the Drawings

The foregoing and other features and advantages of the present invention will become more apparent to one skilled in the art to which the present invention relates upon consideration of the following description of the invention with reference to the accompanying drawings wherein:
Fig. 1 is a schematic illustration depicting the manner in which a wheel mounted tire pressure sensor and transmitter rotate relative to a receiver mounted on a body of a vehicle;
Fig. 2 is a simplified schematic illustration depicting the relationship between the sensor and transmitter that rotate with the vehicle wheel, the receiver on the body of the vehicle, and a display that is visible to an operator of the vehicle;
Fig. 3 is a schematic illustration of the transmitter that rotates with the vehicle wheel;
Fig. 4 is a schematic illustration of the receiver that is disposed on the body of the vehicle;
Fig. 5 is a graph depicting the manner in which a signal received by the receiver of Fig. 4 varies with rotation of a vehicle wheel and transmitter of Fig. 3;
Fig. 6 is a schematic illustration of circuitry that reduces variations in the signal of Fig. 5;
Fig. 7 is a graph illustrating the manner in which variations in the signal of Fig. 5 are reduced by the circuitry of Fig. 6;
Fig. 8 is a schematic illustration of circuitry that amplifies a portion of the signal of Fig. 5 and compresses a portion of the signal;
Fig. 9 is a graph illustrating the manner in which variations in the signal of Fig. 5 are reduced by the circuitry of Fig. 8; and
Fig. 10 is a schematic illustration depicting data that can be carried by the signal of Fig. 5.

### Description of Example Embodiments

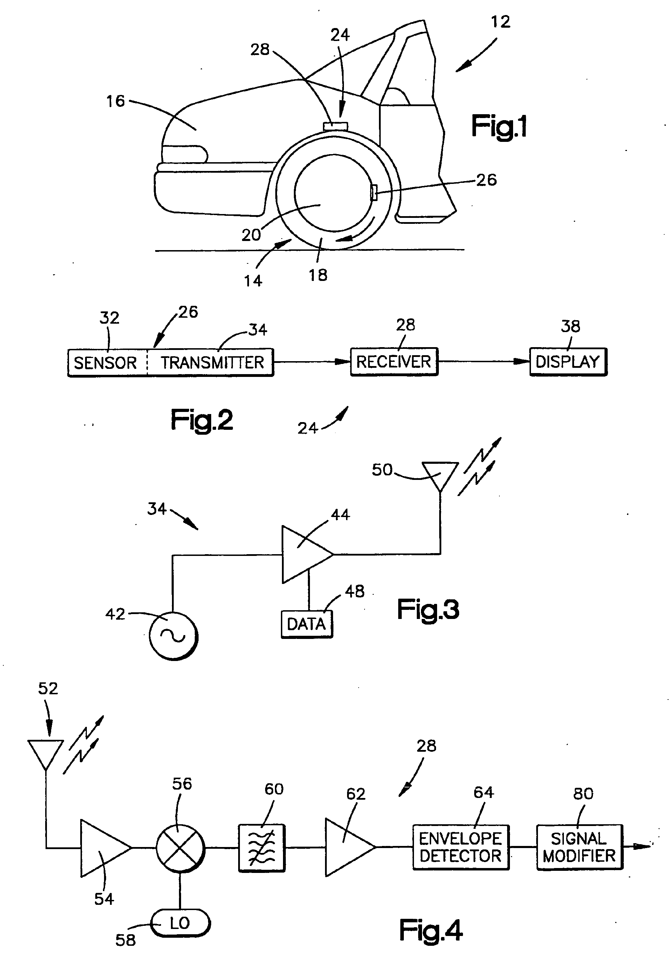

A portion of a vehicle 12 is illustrated schematically in Fig. 1. The vehicle 12 has a wheel 14 that is rotatable relative to a body 16 of the vehicle. The wheel 14 of the vehicle includes a tire 18 that is mounted on a wheel rim 20.

A tire pressure monitoring apparatus 24 provides an operator of the vehicle 12 with an indication of pressure in the tire 18. The tire pressure monitoring apparatus 24 includes a combined tire pressure sensor and transmitter unit 26 that is connected with the rim 20 of the vehicle wheel 14. A receiver 28 is connected with the body 16 of the vehicle.

The combined tire pressure sensor and transmitter unit 26 includes a sensor 32 (Fig. 2). In one example, the sensor 32 senses fluid (air) pressure in the tire 18. It is to be understood that fluid pressure is just one example of a tire condition that the sensor 32 may be configured to sense. Another example tire condition is tire temperature. The sensor 32 has an output that is indicative of the sensed tire condition(s). In the present example, the output varies as a function of the sensed variation in the pressure in the tire 18.

The combined tire pressure sensor and transmitter unit 26 includes a transmitter 34 that is operatively connected to receive a signal indicative of the output of the sensor 32. The transmitter 34 is effective to transmit a radio frequency signal that is indicative of the sensed tire condition. In the present example, the signal conveys data that is a function of the fluid pressure in the tire 18.

The receiver 28 receives the radio frequency signal from the transmitter 34. The receiver 28 includes components to process the received data indicative of the fluid pressure. In turn, the receiver 28 is operatively connected to provide an indication of the sensed fluid pressure to a person (e.g., a vehicle operator, not shown). In the present example, the receiver 28 provides an output that is conducted to a display 38 on a dashboard of the vehicle. The display 38 indicates the fluid pressure in the tire 18 on the wheel 14.

The transmitter 34 (Fig. 3) includes a radio frequency oscillator 42 that is connected with an amplifier 44. Data, indicated schematically at 48 in Fig. 3, is transmitted from the sensor 32 to the amplifier 44. The data 48 from the sensor 32 is indicative of the fluid pressure in the tire 18. The amplifier 44 utilizes this data to vary the pulse width of the radio frequency signals provided by the oscillator 42 to encode the data on the radio frequency signal provided by the oscillator. The antenna 50 is connected with the amplifier 44 and is effective to transmit a radio frequency signal having a constant bandwidth and having pulses with a width that varies as a function of the data 48 indicative of the fluid pressure in the tire 18.

The receiver 28 (Fig. 4) includes an antenna 52 that receives the output from the antenna 50 of the transmitter 34. The antenna 52 is connected with a linear amplifier 54. The output from the linear amplifier 54 is conducted to a mixer 56. In addition to be connected with the linear amplifier 54, the mixer 56 is connected with a local oscillator 58.

The output from the mixer 56 is conducted to an intermediate frequency filter 60. The intermediate frequency filter 60 is, in turn, connected with an intermediate frequency amplifier 62. The output from the intermediate amplifier 62 is transmitted to an envelope detector 64. The envelope detector 64 functions to detect the bandwidth envelope of the radio frequency signal transmitted from the amplifier 62 to the envelope detector 64.

When the vehicle 12 is stationary, the wheel 14 does not rotate relative to the body 16 of the vehicle. The antenna 52 of the receiver 28 receives a radio frequency signal from the transmitter 34. Since the vehicle 12 is stationary, the radio frequency signal received at the antenna 52 has a constant bandwidth, the same as the radio frequency signal transmitted from the antenna 50 of the transmitter 34.

When the vehicle 12 begins to move, the wheel 14 rotates relative to the vehicle body 16 and the receiver 28 that is connected to the body. As the wheel 14 rotates, the distance between the transmitter 34 and the receiver varies. In addition, the orientation of the transmitter 34 relative to the receiver 28 varies.

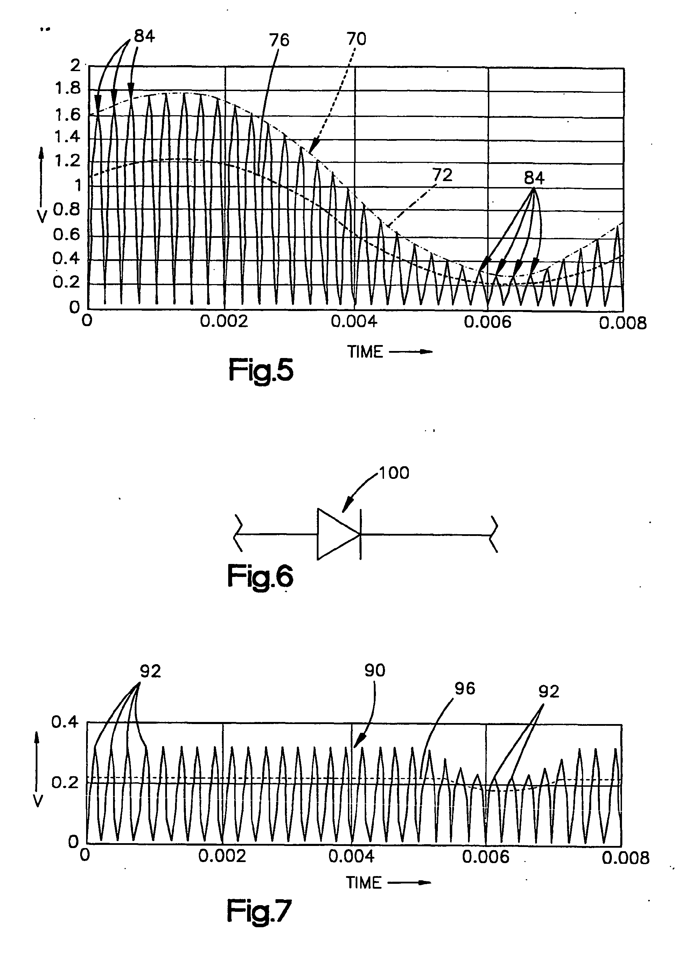

As the wheel 14 rotates and the distance between the transmitter and receiver 28 varies, the amplitude of the signal received by the receiver antenna 52 will vary even though the amplitude of the signal transmitted from the antenna 50 of the transmitter 34 is constant. During rotation of the vehicle wheel 14, a radio frequency signal 70 (Fig. 5) received by the antenna 52 had an amplitude that varied in the manner indicated by a dash line 72. Of course, the greater the speed of the vehicle 12 and the rate of rotation of the wheel 14, the greater will be the rate of variation in the amplitude indicated by the dash line 72.

In order to decode data carried by the radio frequency signal 70, a determination is made as to whether the instantaneous value of the radio frequency signal is greater or less than a reference signal 76. Therefore, the reference signal 76 must vary as a direct function of variations in the bandwidth of the radio frequency signal 70. As vehicle speed increases, it becomes increasingly difficult to have the reference signal 76 accurately follow the amplitude and to determine whether or not the instantaneous value of the radio frequency signal 70 is greater than or less than the reference signal.

In accordance with a feature of the present invention, a signal modifier 80 (Fig. 4) contains circuitry that reduces amplitude variations induced in the radio frequency signal 70 as a result of rotation of the transmitter 34 with the wheel 14 of the vehicle. In one embodiment of the invention, the circuitry in the signal modifier 80 included a limiter that limits the maximum magnitude of pulses 84 (Fig. 5) in the radio frequency signal 70. Thus, when the magnitude of the pulses 84 is greater than a predetermined magnitude, the magnitude of the pulses is reduced to a predetermined maximum magnitude. This results in the radio frequency signal 70 (Fig. 5) being changed to the modified radio frequency signal 90 (Fig. 7).

The modified radio frequency signal 90 (Fig. 7) has some pulses 92 with a maximum amplitude that is substantially less than the maximum amplitude of corresponding pulses 84 in the radio frequency signal 70 (Fig. 5). However, the pulses 84 of the radio frequency signal 70 having a relatively small amplitude were conducted through the signal modifier 80 without being changed. Only the amplitude of the pulses 84 in the radio frequency signal 70 (Fig. 5) having a relatively large amplitude, were reduced to form the pulses 92 of the radio frequency signal 90 (Fig. 7). All of the pulses 92 of the radio frequency signal 90 have the same width as the corresponding pulses 84 in the radio frequency signal 70.

The relatively small amplitude pulses 92 adjacent the time designated 0.006 in the modified radio frequency signal 90 (Fig. 7) have an amplitude that is substantially the same as the amplitude of pulses 84 at the same time in the radio frequency signal 70 (Fig. 5). However, pulses 92 of the modified radio frequency signal 90 (Fig. 7) at other times have an amplitude that is substantially less than the amplitude of corresponding pulses 84 in the radio frequency signal 70. For example, pulses 92 in the modified radio frequency signal 90 have a relatively small magnitude in the period of time between zero and 0.002 in Fig. 7. However, the radio frequency signal 70 received by the antenna 52 has pulses 84 (Fig. 5) with a relatively large amplitude in the time period between zero and 0.002. Although some of the pulses 92 in the modified radio frequency signal 90 have amplitudes that differ from the amplitudes of corresponding pulses 84 in the radio frequency signal 70, the pulses 92 in the modified radio frequency signal 90 have the same pulse width as corresponding pulses 84 in the radio frequency signal 70.

The amplitude of pulses 84 (Fig. 5) of the radio frequency signal 70 are substantially reduced by the signal modifier 80 (Fig. 4) to provide a modified radio frequency signal 90 having pulses with a relatively small amplitude in the time period between zero and 0.002 (Fig. 7). This enables a reference signal 96 (Fig. 7) to vary within a much smaller range than the reference signal 76 (Fig. 5). This facilitates determining whether or not the amplitude of the pulses 92 exceeds the reference signal 96 at any instant during transmission of the modified radio frequency signal 90.

To change the radio frequency signal 70 from the bandwidth configuration illustrated in Fig. 5 to the modified radio frequency signal 90 having the bandwidth configuration illustrated in Fig. 7, a diode 100 (Fig. 6) was utilized as a limiter. The diode 100 has a barrier potential that determines the maximum amplitude of the pulses 92 of the modified radio frequency signal 90. If the magnitude of the pulses 84 of the radio frequency signal 70 exceed the barrier potential of the diode 100, the diode is effective to modify the pulse to have a maximum amplitude corresponding to the barrier potential of the diode. When the diode 100 modifies a pulse 84 of the radio frequency signal 70, the diode reduces the amplitude of the pulse without changing the width of the pulse.

The pulses 84 (Fig. 5) of the radio frequency signal 70 are reconfigured by the diode 100 to have a maximum amplitude that is a function of the barrier potential of the diode. However, pulses 84 for the radio frequency signal 70 (Fig. 5) having a maximum amplitude that is less than the barrier potential of the diode 100 are conducted through the diode without being modified.

Although only the diode 100 for the signal modifier 80 has been illustrated in Fig. 6, it should be understood that the signal modifier may contain other circuitry, such as resistors and/or capacitors, in association with the diode 100 to facilitate modification of the radio frequency signal 70 from the bandwidth configuration of Fig. 5 to the bandwidth configuration of Fig. 7. Although a specific reduction in the maximum amplitude of the pulses 84 of the radio frequency signal 70 has been illustrated in the modified radio frequency signal 90 of Fig. 7, it should be understood that the pulses of the radio frequency signal 70 could be changed to a greater or lesser extent by the signal modifier 80 if desired.

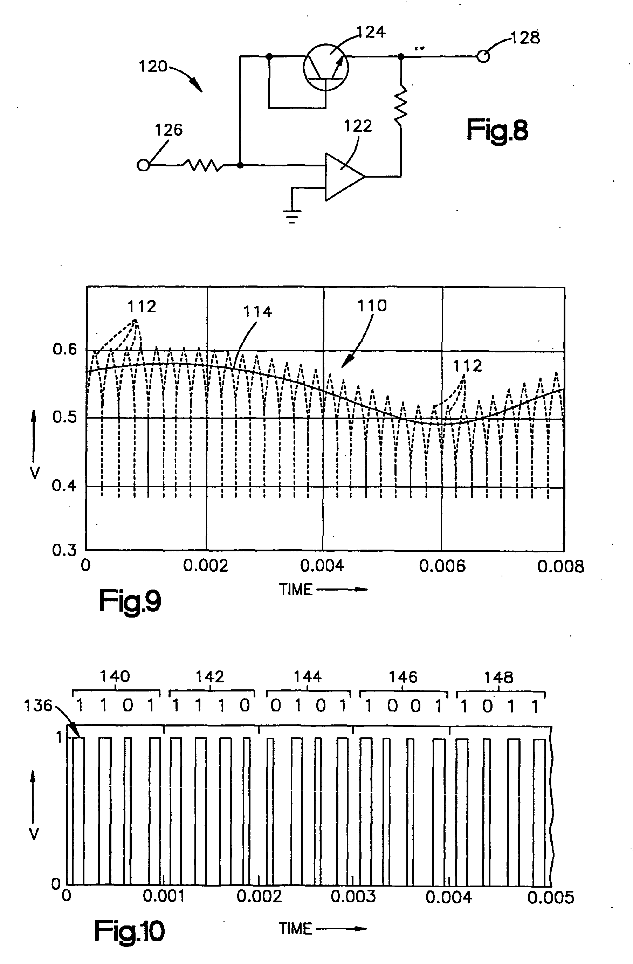

It is contemplated that the signal modifier 80 could be constructed so as to amplify pulses 84 of the radio frequency signal 70 (Fig. 5) having a relatively small magnitude and to compress pulses 84 of the radio frequency signal 70 having a relatively large magnitude. The radio frequency signal 70 (Fig. 5) received at the antenna 52 (Fig. 4) of the receiver 28 contains pulses 84 of a relatively large magnitude in the time between zero and 0.002 in the graph of Fig. 5. However, during the time between 0.005 and 0.007, the pulses 84 in the radio frequency signal 70 have a relatively small amplitude. By decreasing the amplitude of the pulses in the time period between zero and 0.002 and increasing the amplitude of the pulses 84 in the time period between 0.005 and 0.007, the radio frequency signal 70 is reconfigured to provide a modified radio frequency signal 110 (Fig. 9).

The modified radio frequency signal 110 has a bandwidth with a larger amplitude than the modified radio frequency signal 90 of Fig. 7. Thus, the modified radio frequency signal 90 of Fig. 7 has a maximum bandwidth of 0.3 volts while the modified radio frequency signal 110 of Fig. 9 has a maximum bandwidth of approximately 0.6 volts. The larger amplitude of the bandwidth of the modified radio frequency signal 110 facilitates the processing of the signal. However, the width of the pulses 112 in the modified radio frequency signal 110 is the same as the width of the corresponding pulses 84 in the radio frequency signal 70 of Fig. 5.

The modified radio frequency signal 110 (Fig. 9) includes pulses 112. The amplitude of the pulses 112 in the time period between zero and 0.002 is less than the amplitude of the pulses 84 of the radio frequency signal 70 of Fig. 5 in the time period between zero and 0.002. The width of the pulses 112 in the time period between zero and 0.002 is the same as the width of the corresponding pulses 84 in the radio frequency signal 70 in the time period between zero and 0.002.

The amplitude of the pulses 112 (Fig. 9) of the modified radio frequency signal 110 in the time period 0.005 and 0.007 is greater than the amplitude of the pulses 84 for the radio frequency signal 70 (Fig. 5) for the same time period, that is, between 0.005 and 0.007. The width of the pulses 112 of the modified radio signal 110 in the time period 0.005 and 0.007 is the same as the width of the corresponding pulses 84 for the radio frequency signal 70 for the same time period, that is, between 0.005 and 0.007.

A reference signal, indicated at 114 in Fig. 9, associated with the modified radio frequency signal 110 does not vary as much as the reference signal 76 associated with the radio frequency signal 70 of Fig. 5. This facilitates tracking of changes in the radio frequency signal 110.

The second embodiment of the signal modifier 80 (Fig. 4) contains electrical circuitry 120 (Fig. 8). that amplifies pulses 84 (Fig. 5) in the radio frequency signal 70 having a relatively small amplitude and compresses pulses 84 in the radio frequency signal 70 having a relatively large amplitude. The circuitry 120 includes an amplifier 122 that is effective to amplify the pulses 84 in the radio frequency signal 70 having a relatively small amplitude. A transistor 124 is effective to compress the pulses having a relatively large amplitude.

The circuitry 120 (Fig. 8) includes an input terminal 126 that is connected with the envelope detector 64 (Fig. 4) and an output terminal 128 that is connected with the display 38 of Fig. 2. The voltage conducted to the amplifier 122 is amplified and transmitted to the output 128. However, relatively high voltage or large amplitude pulses 84 in the radio frequency signal 70 are effective to render the transistor 124 conducting. The output from the transistor 124 is at a lower voltage than the peak voltage of the large amplitude pulses 84 that rendered the transistor 124 conducting. Therefore, the relatively large amplitude pulses 84 in the radio frequency signal 70 (Fig. 5) are compressed or reduced in amplitude.

The relationship of the input voltage to the circuitry 120 to the output voltage from the circuitry 120 is a logarithmic curve having a relatively steep initial portion corresponding to the amplification of the low amplitude pulses 84 in the radio frequency signal 70 and a relatively slow rising or horizontal portion at voltage levels corresponding to the peak voltages of the pulses 84 in the portion of the radio frequency signal 70 having a relatively large amplitude. The circuitry 120 is effective to change the amplitude of the pulses 84 (Fig. 5) without changing the width of the pulses.

The radio frequency signal 70 carries data that is indicative of the fluid pressure in the tire 18. It is contemplated that data could be carried on the radio frequency signal 70 in any one of many different known ways. In one specific embodiment of the invention, the radio frequency signal 70 is configured to transmit data as a function of the width of the pulses 84.

The data is encoded on the radio frequency signal 70 in a four-bit binary system. Thus, the pulses are divided into groups of four with each pulse representing either a one (1) or a zero (0). When the pulses are to represent a one, the pulses were relatively wide and when the pulses are to represent a zero, they are relatively narrow.

It should be understood that that in Fig. 5, the pulses 84 have all been shown as having the same width. Thus, all of the pulses 84 are relatively wide and would represent a one (1). However, an actual radio frequency signal 70 would have some wide pulses and some narrow pulses.

From the signal modifier 80, the modified radio frequency signal, that is, either the radio frequency signal 90 of Fig. 7 or the radio frequency signal 110 of Fig. 9 is transmitted to processing circuitry that changes the pulses into square wave pulses 136 that extend between a voltage of one and zero in the manner illustrated schematically in Fig. 10. For the length of time that a pulse is above the reference signal 96 of Fig. 7 or the reference signal 114 of Fig. 9, the pulse is provided with a value of one volt. For the length of time that the pulse is below the reference signal 96 or 114, the pulse has a value of zero volts.

In Fig. 10, the first four bit binary code is 1101 in the manner indicated by indicia 140 disposed above pulses 136. The first two pulses and the fourth pulse are relatively wide and represent a one. The third pulse is relatively narrow and represents a zero. In the next group of indicia 142, the first three pulses are relatively wide and represent a one while the fourth pulse is relatively narrow and represents a zero. Succeeding groups of indicia 144, 146 and 148 represent different arrangements of ones and zeroes.

It should be understood that Fig. 10 is merely a schematic illustration depicting the manner in that pulse widths are varied to represent either a zero or a one in a four-bit binary system. Each of the groups of indicia 140-148 represents a different number. If the indicia was truly representative of the fluid pressure in a tire, the tire pressure would be varying with each group of indicia. However, in an actual installation, it is contemplated that the tire pressure will vary slowly so that each of the groups 140-148 of indicia would have the same arrangement of ones and zeroes. The pulses 140 of Fig. 10 should be considered as merely being representative of various possible combinations of pulses and not as being representative of the manner in which the fluid pressure may vary in a tire 18.

The present invention relates to an apparatus 24 for monitoring pressure in a tire of a vehicle wheel 14. The apparatus 24 includes a transmitter 34 that is connected with the vehicle wheel 14 for rotation therewith. The transmitter 34 is operable to provide a signal containing data that is a function of the fluid pressure in the tire 18 of the vehicle wheel 14. A receiver 28 is connected with a body 16 of the vehicle 12 to receive the signal 70 that is transmitted from the transmitter 34.

The signal 70 received by the receiver 28 has an amplitude that varies as a result of rotation of the transmitter 34 with the wheel 14 of the vehicle 12. In accordance with a feature of the present invention, the receiver 28 has circuitry 80 that reduces amplitude variations induced as a result of rotation of the transmitter 34 with the wheel of the vehicle.

The circuitry 80 that reduces amplitude variations induced as a result of rotation of the transmitter 34 with the wheel 14 of the vehicle may include a limiter 100 that limits the maximum magnitude of the amplitude. Alternatively, the circuitry 80 that reduces amplitude variations induced as a result of rotation of the transmitter 34 with the wheel 14 of the vehicle 12 may include circuitry 120 that is effective to amplify a portion of the signal 70 having a magnitude that is less than a predetermined magnitude and is effective to compress a portion of the signal 70-having a magnitude that is less than a predetermined magnitude.

From the above description of the invention, those skilled in the art will perceive improvements, changes and modifications. Such improvements, changes and modifications within the skill of the art are intended to be covered by the appended claims.

## Claims

1. An apparatus for monitoring a condition of a tire (18) of a vehicle (12), said apparatus including:
a sensor (32) for sensing a tire condition;
a transmitter (34) rotatable with the tire (18) and operable to transmit a pulse width encoded signal indicative of the tire condition, amplitude variation being induced in the signal during rotation of said transmitter (34) with the tire (18); and
a receiver (28) located at the vehicle (12) and operable to receive and decode the pulse width encoded signal from said transmitter (34), said receiver having circuitry (80) that reduces the induced amplitude variation.

2. An apparatus as set forth in claim 1 wherein said circuitry (80) includes a limiter (100) that reduces the maximum magnitude of the amplitude of the received signal.

3. An apparatus as set forth in claim 1 wherein said circuitry (80) includes a portion (120) effective to amplify a portion of the received signal having a maximum magnitude that is less than a predetermined magnitude and effective to compress a portion of the received signal having a maximum magnitude that is greater than a predetermined magnitude.

4. An apparatus as set forth in claim 1 wherein said circuitry (80) includes a diode (100) through that the received signal is conducted to limit the amplitude of the signal to a predetermined maximum amplitude that is less than the maximum amplitude of the received signal.

5. An apparatus as set forth in claim 1 wherein said circuitry (80) includes a first circuit component (124) through which a first portion of the received signal having a magnitude greater than a predetermined value is conducted to decrease the magnitude of the first portion and a second circuit component (122) through which a second portion of the received signal having a magnitude less than a predetermined value is conducted to increase the magnitude of the second portion.

6. An apparatus as set forth in claim 1 wherein the received signal includes pulses, said receiver (28) includes a portion that provides a reference signal that varies as a function of variation in amplitude in the received signal and that detects when portions of pulses in the received signal having a magnitude that is greater than the reference signal and a magnitude that is less than the reference signal.

7. A method of monitoring a condition of a tire (18) of a vehicle (12), said method including:
sensing a tire condition;
transmitting a pulse width encoded signal indicative of the tire (18) condition from a transmitter (34) at the tire (18);
rotating the transmitter (34) with the tire (18), amplitude variation being induced in the signal during rotation of the transmitter (34) with the tire (18);
receiving and decoding the pulse width encoded signal from the transmitter (34) at a receiver (28) located at the vehicle (12); and
reducing the induced amplitude variation in the received signal.

8. A method as set forth in claim 7 wherein said step of reducing includes passing the received signal through a limiter arrangement (100) that reduces the maximum magnitude of the amplitude of the received signal.

9. A method as set forth in claim 7 wherein said step of reducing includes amplifying a portion of the received signal having a maximum magnitude that is less than a predetermined magnitude and compressing a portion of the received signal having a maximum magnitude that is greater than a predetermined magnitude.

10. A method as set forth in claim 7 wherein said step of reducing includes passing the received signal through a diode (100) to limit the amplitude of the signal to a predetermined maximum amplitude that is less than the maximum amplitude of the received signal.

## Patentansprüche

1. Vorrichtung zum Überwachen eines Zustands eines Reifens (18) von einem Fahrzeug (12), wobei die Vorrichtung Folgendes aufweist:
einen Sensor (32) zum Abfühlen eines Reifenzustands;
einen Sender (34), der mit dem Reifen (18) drehbar ist und betriebsbereit ist, um ein pulsweitencodiertes Signal zu senden, welches eine Anzeige für den Reifenzustand liefert, wobei während der Drehung des Senders (34) mit dem Reifen (18) eine Amplitudenschwankung in dem Signal induziert wird; und
einen Empfänger (28), der an dem Fahrzeug (12) gelegen ist und betriebsbereit ist, um das pulsweitencodierte Signal von dem Sender (34) zu empfangen und zu decodieren, wobei der Empfänger eine Schaltungsanordnung (80) besitzt, die die induzierte Amplitudenschwankung reduziert.

2. Vorrichtung nach Anspruch 1, wobei die Schaltungsanordnung (80) einen Limiter bzw. Begrenzer (100) aufweist, der die maximale Größe der Amplitude des empfangenen Signals reduziert.

3. Vorrichtung nach Anspruch 1, wobei die Schaltungsanordnung (80) einen Teil (120) aufweist, der das Verstärken eines Teils des empfangenen Signals bewirkt, welches eine maximale Größe besitzt, die geringer ist als eine vorbestimmte Größe, und der das Komprimieren eines Teils des empfangenen Signals bewirkt, der eine maximale Größe besitzt, die größer ist als eine vorbestimmte Größe.

4. Vorrichtung nach Anspruch 1, wobei die Schaltungsanordnung (80) eine Diode (100) aufweist, durch die das empfangene Signal geführt wird, um die Amplitude des Signals auf eine vorbestimmte maximale Amplitude zu begrenzen, die geringer ist als die maximale Amplitude des empfangenen Signals.

5. Vorrichtung nach Anspruch 1, wobei die Schaltungsanordnung (80) eine erste Schaltungskomponente (124) aufweist, durch die ein erster Teil des empfangenen Signals geführt wird, welcher eine Größe besitzt, die größer ist als ein vorbestimmter Wert, um die Größe des ersten Teils zu verringern, und eine zweite Schaltungskomponente (122), durch welche ein zweiter Teil des empfangenen Signals geführt wird, welcher eine Größe besitzt, die geringer als ein vorbestimmter Wert ist, um die Größe des zweiten Teils zu vergrößern.

6. Vorrichtung nach Anspruch 1, wobei das empfangene Signal Impulse aufweist, wobei der Empfänger (28) einen Teil aufweist, der ein Referenzsignal liefert, welches als eine Funktion der Schwankung der Amplitude in dem empfangenen Signal variiert, und welcher detektiert, wann Teile der Impulse in dem empfangenen Signal eine Größe besitzen, die größer ist als das Referenzsignal, und eine Größe, die geringer ist als das Referenzsignal.

7. Verfahren zum Überwachen eines Zustands eines Reifens (18) von einem Fahrzeug (12), wobei das Verfahren Folgendes aufweist:
Abfühlen eines Reifenzustands;
Übertragen eines pulsweitencodierten Signals, welches eine Anzeige für den Zustand des Reifens (18) bildet, von einem Sender (34) an dem Reifen (18);
Drehen des Senders (34) mit dem Reifen (18), wobei mit der Drehung des Senders (34) mit dem Reifen (18) in dem Signal eine Amplitudenschwankung induziert wird;
Empfangen und Decodieren des pulsweitencodierten Signals von dem Sender (34) an dem Empfänger (28), der an dem Fahrzeug (12) gelegen ist; und
Reduzieren der induzierten Amplitudenschwankung in dem empfangenen Signal.

8. Verfahren nach Anspruch 7, wobei der Schritt des Reduzierens aufweist, das empfangene Signal durch eine Begrenzeranordnung (100) zu führen, die die maximale Größe der Amplitude des empfangenen Signals reduziert.

9. Verfahren nach Anspruch 7, wobei der Schritt des Reduzierens aufweist, einen Teil des empfangenen Signals mit einer maximalen Größe, die geringer ist als eine vorbestimmte Größe, zu vergrößern bzw. zu verstärken, und einen Teil des empfangenen Signals mit einer maximalen Größe, die größer ist als eine vorbestimmte Größe, zu komprimieren.

10. Verfahren nach Anspruch 7, wobei der Schritt des Reduzierens aufweist, das empfangene Signal durch eine Diode (100) zu führen, um die Amplitude des Signals auf eine vorbestimmte maximale Amplitude zu begrenzen, die geringer ist als die maximale Amplitude des empfangenen Signals.

## Revendications

1. Appareil pour contrôler un état d'un pneumatique (18) d'un véhicule (12), ledit appareil comprenant :
un capteur (32) destiné à capter un état du pneumatique ;
un émetteur (34) pouvant tourner avec le pneumatique (18) et apte à émettre un signal codé en largeur d'impulsion représentatif de l'état du pneumatique, une variation d'amplitude étant induite dans le signal pendant une rotation dudit émetteur (34) avec le pneumatique (18) ; et
un récepteur (28) placé au niveau du véhicule (12) et apte à recevoir et décoder le signal codé en largeur d'impulsion provenant dudit émetteur (34), ledit récepteur ayant un circuit (80) qui réduit la variation d'amplitude induite.

2. Appareil selon la revendication 1, dans lequel ledit circuit (80) comprend un limiteur (100) qui réduit la grandeur maximale de l'amplitude du signal reçu.

3. Appareil selon la revendication 1, dans lequel ledit circuit (80) comprend une partie (120) ayant pour effet d'amplifier une partie du signal reçu ayant une grandeur maximale qui est inférieure à une grandeur prédéterminée et ayant pour effet de comprimer une partie du signal reçu ayant une grandeur maximale qui est supérieure à une grandeur prédéterminée.

4. Appareil selon la revendication 1, dans lequel ledit circuit (80) comprend une diode (100) à travers laquelle le signal reçu est conduit pour limiter l'amplitude du signal à une amplitude maximale prédéterminée qui est inférieure à l'amplitude maximale du signal reçu.

5. Appareil selon la revendication 1, dans lequel ledit circuit (80) comprend un premier composant (124) de circuit à travers lequel une première partie du signal reçu ayant une grandeur supérieure à une valeur prédéterminée est conduite pour diminuer la grandeur de la première partie, et un second composant (122) de circuit à travers lequel une seconde partie du signal reçu ayant une grandeur inférieure à une valeur prédéterminée est conduite pour augmenter la grandeur de la seconde partie.

6. Appareil selon la revendication 1, dans lequel le signal reçu comprend des impulsions, ledit récepteur (28) comprend une partie qui produit un signal de référence qui varie en fonction d'une variation de l'amplitude du signal reçu et qui détecte lorsque des parties d'impulsions dans le signal reçu ont une grandeur qui est supérieure au signal de référence et une grandeur qui est inférieure au signal de référence.

7. Procédé de contrôle d'un état d'un pneumatique (18) d'un véhicule (12), ledit procédé comprenant :
la détection d'un état du pneumatique ;
l'émission d'un signal codé en largeur d'impulsion représentatif de l'état du pneumatique (18) à partir d'un émetteur (34) situé au niveau du pneumatique (18) ;
la rotation de l'émetteur (34) avec le pneumatique (18), une variation d'amplitude étant induite dans le signal pendant la rotation de l'émetteur (34) avec le pneumatique (18) ;
la réception et le décodage du signal codé en largeur d'impulsion provenant de l'émetteur (34) au niveau d'un récepteur (28) placé au niveau du véhicule (12) ; et
la réduction de la variation d'amplitude induite dans le signal reçu.

8. Procédé selon la revendication 7, dans lequel ladite étape de réduction comprend le passage du signal reçu à travers un montage limiteur (100) qui réduit la grandeur maximale de l'amplitude du signal reçu.

9. Procédé selon la revendication 7, dans lequel ladite étape de réduction comprend l'amplification d'une partie du signal reçu ayant une grandeur maximale qui est inférieure à une grandeur prédéterminée et la compression d'une partie du signal reçu ayant une grandeur maximale qui est supérieure à une grande prédéterminée.

10. Procédé selon la revendication 7, dans lequel ladite étape de réduction comprend le passage du signal reçu à travers une diode (100) pour limiter l'amplitude du signal à une amplitude maximale prédéterminée qui est inférieure à l'amplitude maximale du signal reçu.
